# FASCICULE DE BREVET EUROPEEN

(11) **EP 0 489 638 B1**
(45) Date de publication et mention de la délivrance du brevet: **17.05.1995**
(21) Numéro de dépôt: 91403261.0
(22) Date de dépôt: 02.12.1991
(51) Int. Cl.: B60G 11/00, B60G 3/20

(54) **Dispositif formant suspension notamment pour une roue directrice d'un véhicule automobile**
Aufhängungsvorrichtung, insbesondere für gelenktes Rad eines Kraftfahrzeugs
Suspension device particularly for steered wheel of automotive vehicle

(30) Priorité: 03.12.1990 FR 9015120
(43) Date de publication de la demande: 10.06.1992
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, F-91390 Morsang-Sur-Orge (FR); Barthelemy, André, F-78470 Saint Remy Les Chevreuses (FR)
(74) Mandataire: Berger, Helmut

(56) Documents cités:
- EP-A- 0 135 807
- EP-A- 0 245 220
- BE-A- 444 162
- DE-A- 2 332 330
- DE-A- 3 303 551
- FR-A- 1 407 708
- FR-A- 2 605 941
- GB-A- 2 100 201
- GB-A- 2 231 540
- US-A- 4 065 152
- US-A- 4 875 703

## Description

La présente invention concerne un dispositif formant suspension notamment pour une roue directrice d'un véhicule automobile.

On sait que pour obtenir un bon comportement dynamique d'un véhicule automobile, il est important, en ce qui concerne l'essieu avant et la suspension avant de ce véhicule, de diminuer la valeur du déport, mesuré au centre de la roue, de l'axe de pivotement du pivot de chaque roue directrice par rapport au plan médian vertical de la roue.

Les dispositifs de suspension à double triangle, par rapport à ceux du type Mac Pherson, facilitent la construction d'un pivot de roue à déport réduit, bien que ce déport soit limité par le volume incompressible ou irréductible de l'articulation inférieure du pivot de roue constituée par une rotule et par l'épaisseur du disque de frein augmentée par l'étrier correspondant, l'ensemble étant enfermé dans la jante de la roue sans déborder vers l'extérieur de celle-ci. De plus, les éléments de suspension des roues directrices constitués par des ressorts de suspension sont jusqu'à maintenant placés vers le centre du véhicule entre les deux roues directrices et respectivement à proximité de celles-ci. Le volume occupé par chacun des ressorts de suspension est considérable et réduit énormément l'espace nécessaire au compartiment moteur du véhicule et, dans le cas de véhicules équipés de groupes motopropulseurs disposés transversalement entre les roues avant, il est même impossible de loger ces ressorts de suspension du fait qu'il n'est pas possible d'augmenter infiniment la voie avant.

Le document GB-A-2 231 540 décrit un dispositif formant suspension comprenant les caractéristiques énoncées au préambule de la revendication 1.

Cependant, selon ce dispositif connu, l'articulation supérieure du pivot est relativement complexe puisqu'elle comprend un corps 34 reliant le pivot au triangle supérieur par deux axes orthogonaux 31, 61 et portant un roulement d'appui 39 pour le ressort pneumatique 48 immobile en rotation.

La présente invention a pour but d'éliminer les inconvénients des dispositifs connus ci-dessus en proposant un dispositif formant suspension comprenant l'ensemble des caractéristiques définies dans la revendication 1.

Le dispositif conforme à l'invention permet non seulement un montage plus simple et fiable par rapport au dispositif du document GB-A-2 231 540, mais est également agencé pour dégager au maximum l'espace du compartiment moteur tout en bénéficiant des avantages routiers que permet un pivot de roue à déport réduit et du bon guidage des roues qui est obtenu par les doubles triangles de suspension.

Suivant un mode de réalisation, l'articulation supérieure précitée est au-dessus de la roue directrice.

Suivant un autre mode de réalisation, l'articulation supérieure est à l'intérieur de la jante de la roue.

Suivant un mode de réalisation, le ressort de suspension est maintenu librement en appui entre une coupelle inférieure montée sur la tête d'appui du pivot et une coupelle supérieure montée à la caisse du véhicule, l'une de ces coupelles pouvant tourner autour de l'axe de pivotement du pivot relativement à la tête d'appui ou à la caisse du véhicule.

La coupelle précitée est montée tournante par l'intermédiaire d'une butée à billes solidarisées à la tête d'appui ou à la caisse du véhicule.

Le ressort de suspension a l'une au moins de ses spires d'extrémité en appui sur les coupelles précitées ou sur la tête d'appui d'un diamètre inférieur à celui des autres spires.

Le dispositif suivant l'invention est utilisé notamment avec deux bras inférieurs et deux bras supérieurs formant un double triangle de suspension avec l'axe de pivotement du pivot définissant un déport relativement faible, mesuré au centre de roue, par rapport au plan médian vertical de la roue du véhicule.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels.

La figure 1 représente une vue d'arrière avec coupe partielle d'un dispositif de suspension d'une roue directrice suivant un premier mode de réalisation de l'invention.

La figure 2 est une vue agrandie avec coupe partielle de la partie supérieure du dispositif de suspension suivant un second mode de réalisation.

La figure 3 est une vue schématique semblable à celle de la figure 1 du dispositif de l'invention suivant un troisième mode de réalisation.

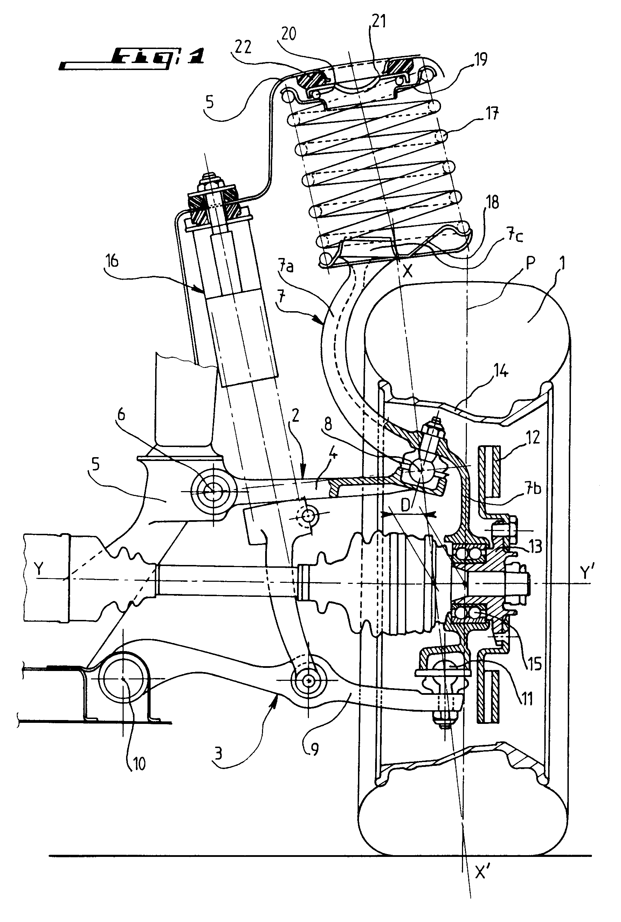

En se reportant à la figure 1, le dispositif de suspension d'une roue avant directrice 1 d'un véhicule automobile comprend deux triangles de suspension respectivement supérieur 2 et inférieur 3 formant la suspension avec les deux bras 4 du triangle supérieur 2 montés pivotants d'une part à la caisse 5 du véhicule par deux articulations élastiques 6 dont les centres sont situés sur un axe longitudinal du véhicule contenu dans un plan horizontal et d'autre part au pivot 7 de la roue 1 par une rotule supérieure 8 au-dessus de l'axe Y-Y' de rotation de la roue 1 et avec les deux bras 9 du triangle inférieur 3 montés pivotants d'une part à la caisse 5 du véhicule par deux articulations élastiques 10 dont les centres sont situés sur un axe longitudinal du véhicule contenu dans un plan horizontal et d'autre part à l'extrémité inférieure du pivot 7 en dessous de l'axe Y-Y' par une rotule 11. Le pivot 7 est commandé en rotation d'une valeur angulaire déterminée autour de l'axe X-X' de rotation passant par les rotules 8 et 11 par une biellette de direction (non représentée) et assure le braquage de l'ensemble roue-frein-moyeu-transmission, le frein à disque 12 et le moyeu 13 étant logés dans la jante 14 de la roue 1 avec le moyeu 13 tournant relativement au pivot 4 par un roulement à billes 15. Le dispositif de suspension comprend de plus un amortisseur 16, par exemple du type hydraulique, monté entre la caisse 5 du véhicule et l'un des bras 9 du triangle inférieur de suspension 3. Le dispositif comprend également un ressort hélicoïdal de suspension 17 du type à compression séparé de l'amortisseur 16.

Selon l'invention, le ressort de suspension 17 est disposé au-dessus de la roue 1 en appui entre le pivot 7 et la caisse 5 du véhicule sensiblement suivant l'axe de pivotement X-X' du pivot 7. Plus précisément, le pivot 7 comprend une partie supérieure curviligne 7a centrée sur l'axe X-X', raccordée à la partie inférieure 7b sensiblement perpendiculaire à l'axe Y-Y' à l'intérieur de la jante 14 et contournant le flanc interne de la roue 1 en se terminant par une tête 7c située juste au-dessus de la roue 1 et servant d'appui libre au ressort de suspension 17. Comme représenté, la spire inférieure du ressort 17 est en appui sur la tête 7c par l'intermédiaire d'une coupelle 18 en appui directement sur la tête 7c tandis que la spire supérieure du ressort 17 est en appui sur une autre coupelle 19 qui peut tourner relativement à la caisse 5 autour de l'axe X-X' par l'intermédiaire d'une butée à billes 20 se déplaçant sur une piste circulaire de guidage métallique 21 solidaire d'une cale élastique 22 par exemple en caoutchouc, elle-même solidarisée à la caisse 5 de façon à isoler cette dernière de l'ensemble formé par la roue 1, le pivot 7 et le ressort de suspension 17. La piste 21 et la coupelle 19 forment ainsi une cage de maintien des billes 20. La butée à billes 20 permet le libre tourillonnement du pivot 7 lors du braquage de ce dernier par la biellette de direction autour de l'axe X-X' en entraînant en rotation le ressort de suspension 17 également autour de cet axe. Il est à noter que la rotule d'articulation 8 est fixée à l'endroit de raccordement entre la partie supérieure 7a et la partie inférieure 7b du pivot 7 en se trouvant à l'intérieur de la jante 14 et l'axe X-X' est déporté relativement au plan médian vertical P de la roue 1 d'une distance D, mesurée au centre de roue, relativement faible.

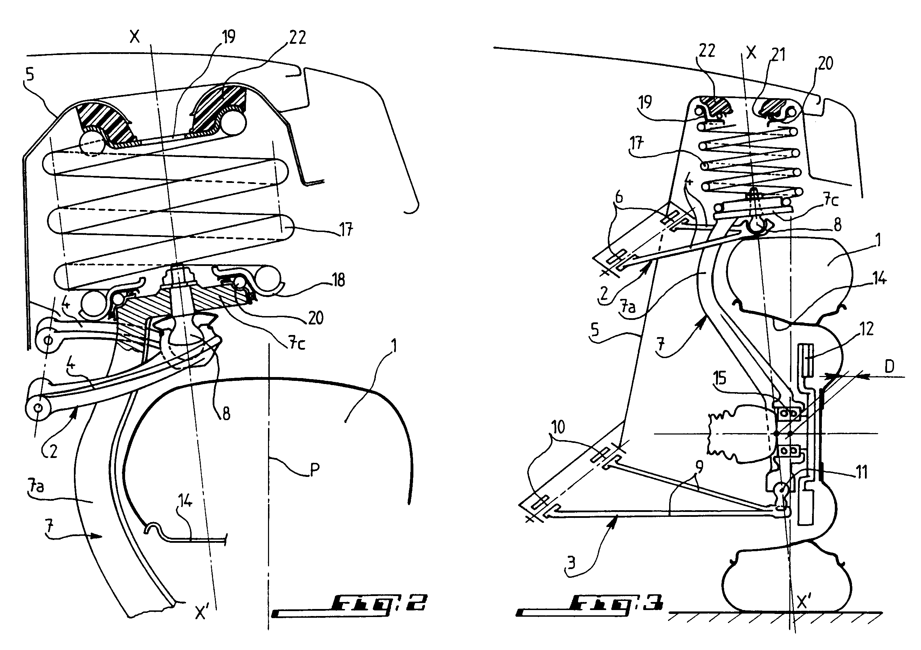

Le dispositif de suspension de la figure 2 ne diffère de celui de la figure 1 que par la coupelle inférieure 18 d'appui du ressort 17 montée librement tournante relativement à la tête d'appui 7c par une butée à billes 20 identique à la butée à billes 20 de la figure 1 et par la coupelle d'appui supérieure 19 du ressort 17 qui est directement solidarisée à la cale élastique 22. On notera également que la rotule d'articulation supérieure 8 est fixée sous la tête d'appui 7c du pivot 7 au-dessus de la roue 1 de façon à l'écarter considérablement de la rotule d'articulation inférieure 11 et permettre ainsi un meilleur guidage de chasse et de carrossage tout en diminuant les efforts que supportent en dynamique les articulations des bras supérieurs 4. Cette figure montre également que le diamètre de la spire extrême supérieure est inférieur à celui des autres spires du ressort 17.

Suivant le mode de réalisation du dispositif de suspension de la figure 3, la spire inférieure du ressort 17, de diamètre inférieur au diamètre des autres spires, est directement en appui libre sur la tête d'appui 7c du pivot 7 tandis que la spire supérieure du ressort 17 est en appui libre sur la coupelle 19 comme dans le mode de réalisation de la figure 1. On notera que la rotule supérieure 8 est fixée à la tête 7c du pivot 7 comme en figure 2, étant bien entendu qu'elle peut être fixée de la manière représentée en figure 1.

Le dispositif de suspension de l'invention tel que décrit ci-dessus dans ses différents modes de réalisation est ainsi agencé pour libérer au maximum le compartiment moteur d'un véhicule automobile. De plus, la dissociation de la fonction amortisseur de la fonction suspension réalisée respectivement par chaque amortisseur 16 et l'ensemble pivot 7 - ressort 17 permet d'optimiser au mieux le rôle de chacune de ces fonctions, d'où un meilleur filtrage des bruits et des vibrations du véhicule. On remarquera de plus que, par rapport aux solutions antérieures, au cours des débattements verticaux de suspension de la caisse du véhicule, le pivot 7 guide en permanence l'axe de la base du ressort 17 et ne lui implique qu'une faible variation angulaire correspondant à la variation angulaire de chasse et de carrossage.

Le dispositif de suspension de l'invention a été décrit comme étant situé à l'avant du véhicule mais il est bien entendu qu'il peut être monté à l'arrière de celui-ci avec la rotule d'articulation des bras supérieurs 4 située sur l'axe X-X' à l'intérieur de la jante 14 et l'amortisseur 16 incliné vers le dessous du coffre à bagages du véhicule. Ce dispositif convient également à des véhicules a quatre roues motrices et à quatre roues directrices. Le ressort de suspension 17 se loge alors dans le passage de roue correspondant, à la partie supérieure de celui-ci et permet d'avoir ainsi un large coffre à bagages.

## Revendications

1. Dispositif formant suspension notamment pour une roue directrice (1) de véhicule automobile, du type comprenant au moins un bras supérieur (4) et au moins un bras inférieur (9) montés pivotants à la caisse (5) du véhicule et reliés par des articulations respectivement supérieure (8) et inférieure (11), telles que des rotules, à un pivot (7) solidaire de la roue (1) commandé par une biellette de direction ; un amortisseur (16) et un ressort (17) séparé de l'amortisseur (16), et où le ressort de suspension (17) est en appui sur le pivot (7), se trouve au moins en partie au-dessus de la roue (1) et est disposé sensiblement suivant l'axe de pivotement (X-X') du pivot (7) passant par les articulations (8 ; 11), le pivot (7) comprenant une partie supérieure curviligne (7a) contournant le flanc de la roue (1) et se terminant par une tête d'appui (7c) pour le ressort de suspension (17) située juste au-dessus de la roue (1), caractérisé en ce que le ressort de suspension (17) est hélicoïdal et est maintenu librement en appui entre la tête d'appui (7c) du pivot (7) et une coupelle supérieure (19) montée à la caisse (5) du véhicule de façon à pouvoir tourner librement relativement à la caisse (5) autour de l'axe de pivotement (X-X') du pivot (7).

2. Dispositif selon la revendication 1, caractérisé en ce que l'articulation supérieure (8) est au-dessus de la roue (1).

3. Dispositif selon la revendication 1, caractérisé en ce que l'articulation supérieure (8) est à l'intérieur de la jante (14) de la roue (1).

4. Dispositif selon la revendication 1, caractérisé en ce que le ressort de suspension (17) est maintenu entre une coupelle inférieure (18) montée sur la tête d'appui (7c) du pivot (7) et une coupelle supérieure (19) montée à la caisse (5) du véhicule, l'une de ces deux coupelles (18 ; 19) pouvant tourner autour de l'axe de pivotement (X-X') du pivot (7) relativement à la tête d'appui (7c) ou à la caisse (5) du véhicule.

5. Dispositif selon la revendication 4, caractérisé en ce que la coupelle (18 ; 19) précitée est montée tournante par l'intermédiaire d'une butée à billes (20) solidarisée à la tête d'appui (7c) ou à la caisse (5) du véhicule.

6. Dispositif selon la revendication 4 ou 5, caractérisé en ce que le ressort de suspension (17) a l'une au moins de ses spires d'extrémité en appui sur les coupelles précitées ou sur la tête d'appui (7c) d'un diamètre inférieur à celui des autres spires.

7. Dispositif selon l'une des revendications précédentes, caractérisé en ce qu'il comprend deux bras inférieurs (4) et deux bras supérieurs (9) formant un double triangle de suspension et en ce que l'axe de pivotement (X-X') du pivot (7) définit, au centre de la roue, un déport (D) relativement au plan médian vertical (P) de la roue (1) du véhicule relativement faible.

## Claims

1. Device forming a suspension in particular for a steerable wheel (1) of an automotive vehicle, of the type comprising at least one upper arm (4) and at least one lower arm (9) which are pivotally mounted onto the body (5) of the vehicle and connected by upper and lower pivotal connections (8) and (11), respectively, such as ball-and-socket joints, with a pivot (7) made fast to the wheel (1) operated by a steering drag rod ; a damper (16) and a spring (17) separated from the damper (16) and wherein the suspension spring (17) is bearing upon the pivot (7), is lying at least in part above the wheel (1) and is disposed substantially along the pivot axis (X-X') of the pivot (7) passing through the pivotal connections (8 ; 11), the pivot (7) comprising a curvilinear upper portion (7a) extending round the side wall of the wheel (1) and terminating into a bearing head (7c) for the suspension spring (17) located just above the wheel (1), characterized in that the suspension spring (17) is helical and freely held in bearing relationship between the bearing head (7c) of the pivot (7) and an upper cup (19) mounted onto the body (5) of the vehicle so that it may turn freely in relation to the body (5) about the pivot axis (X-X') of the pivot (7).

2. Device according to claim 1, characterized in that the upper pivotal connection (8) is above the wheel (1).

3. Device according to claim 1, characterized in that the upper pivotal connection (8) is inside of the rim (14) of the wheel (1).

4. Device according to claim 1, characterized in that the suspension spring (17) is held between a lower cup (18) mounted onto the bearing head (7c) of the pivot (7) and an upper cup (19) mounted onto the body (5) of the vehicle, one of these two cups (18 ; 19) being rotatable about the pivot axis (X-X') of the pivot (7) in relation to the bearing head (7c) or to the body (5) of the vehicle.

5. Device according to claim 4, characterized in that the aforesaid cup (18 ; 19) is rotatably mounted through the medium of a ball thrust bearing (20) made fast to the bearing head (7c) or to the body (5) of the vehicle.

6. Device according to claim 4 or 5, characterized in that the suspension spring (17) has at least one of its end windings bearing upon the aforesaid cups or upon the bearing head (7c) having a smaller diameter than that of the other windings.

7. Device according to one of the foregoing claims, characterized in that it comprises two lower arms (4) and two upper arms (9) forming a double suspension triangle and in that the pivot axis (X-X') of the pivot (7) defines in the center of the wheel a relatively small offset (D) in relation to the vertical middle plane (P) of the wheel (1) of the vehicle.

## Patentansprüche

1. Eine Aufhängung bildende Vorrichtung insbesondere für ein lenkbares Rad (1) eines Kraftfahrzeuges, derjenigen Gattung mit wenigstens einem oberen Arm (4) und wenigstens einem unteren Arm (9), die schwenkbar an dem Kasten (5) des Fahrzeuges angeordnet und durch jeweils ein oberes Gelenk (8) und ein unteres Gelenk (11), wie Kugelgelenke, mit einem mit dem Rad (1) fest verbundenen, durch eine Lenkschubstange betätigten Schwenkglied (7) verbunden sind ; einem Dämpfer (16) und einer von dem Dämpfer (16) getrennten Feder (17) und wobei die Aufhängungsfeder (17) sich an dem Schwenkglied (7) abstützt, sich wenigstens zum Teil oberhalb des Rades (1) befindet und etwa entlang der durch die Gelenke (8; 11) führenden Schwenkachse (X-X') des Schwenkgliedes (7) liegt, wobei das Schwenkglied (7) einen um die Seitenwand des Rades (1) herumführenden und in einen gerade oberhalb des Rades (1) liegenden Stützkopf (7c) für die Aufhängungsfeder (17) endenden krummlinigen oberen Teil (7a) aufweist, dadurch gekennzeichnet, dass die Aufhängungsfeder (17) wendelförmig ist und frei in Abstützung zwischen dem Stützkopf (7c) des Schwenkgliedes (7) und einem an dem Kasten (5) des Fahrzeuges angeordneten oberen Teller (19) gehalten wird, um in bezug auf den Kasten (5) frei drehbar um die Schwenkachse (X-X') des Schwenkgliedes (7) herum schwenkbar zu sein.

2. Vorrichtung nach Anspruch 1, dadurch gekennzeichnet, dass das obere Gelenk (8) oberhalb des Rades (1) liegt.

3. Vorrichtung nach Anspruch 1, dadurch gekennzeichnet, dass das obere Gelenk (8) innerhalb der Felge (14) des Rades (1) liegt.

4. Vorrichtung nach Anspruch 1, dadurch gekennzeichnet, dass die Aufhängungsfeder (17) zwischen einem an dem Stützkopf (7c) des Schwenkgliedes (7) angeordneten unteren Teller (18) und einem an dem Kasten (5) des Fahrzeuges angeordneten oberen Teller (19) gehalten wird, wobei der eine dieser beiden Teller (18;19) sich in bezug auf den Stützkopf (7c) oder auf den Kasten (5) des Fahrzeuges um die Schwenkachse (X-X') des Schwenkgliedes (7) herum drehen kann.

5. Vorrichtung nach Anspruch 4, dadurch gekennzeichnet, dass der vorgenannte Teller (18;19) über ein mit dem Stützkopf (7c) oder mit dem Kasten (5) des Fahrzeuges fest verbundenes Druckkugellager (20) drehbar angeordnet ist.

6. Vorrichtung nach Anspruch 4 oder 5, dadurch gekennzeichnet dass die Aufhängungsfeder (17) sich mit wenigstens einer ihrer Endwindungen an den vorgenannten Tellern oder an dem Stützkopf (7c) abstützt, der einen kleineren Durchmesser als derjenige der anderen Windungen hat.

7. Vorrichtung nach einem der vorangehenden Ansprüche, dadurch gekennzeichnet, dass sie zwei untere Arme (4) und zwei obere Arme (9), die ein doppeltes Aufhängungsdreieck bilden, umfasst und dass die Schwenkachse (X-X') des Schwenkgliedes (7) in der Mitte des Rades einen verhältnismässig schwachen Versatz (D) in bezug auf die senkrechte Mittelebene (P) des Rades (1) des Fahrzeuges bestimmt.
